# EUROPÄISCHE PATENTANMELDUNG

(11) **EP 1 528 080 A1**
(43) Veröffentlichungstag der Anmeldung: **04.05.2005**
(21) Anmeldenummer: 03024714.2
(22) Anmeldetag: 28.10.2003
(51) Int. Cl.: C08J 11/02

(54) **Verfahren und Vorrichtung zum Abführen einer unerwünschten Substanz aus einem Prozessprodukt**

(71) Anmelder: Wiessner GmbH, 95448 Bayreuth (DE)
(72) Erfinder: Hepper, Ronald Dr., 95511 Mistelbach (DE); Kallée Klaus, 06188 Landsberg (DE)
(74) Vertreter: Schröer, Gernot H.

(57) **Zusammenfassung**

Das Verfahren zum Abführen wenigstens einer unerwünschten Substanz aus wenigstens einem Prozessprodukt (G), das wenigstens teilweise aus wenigstens einem Polymerwerkstoff und/oder wenigstens einem Kunststoff besteht, der die wenigstens eine unerwünschte Substanz (S) enthält, wobei die unerwünschte Substanz in einem vorgegebenen Druck- und Temperaturbereich aus dem Polymerwerkstoff bzw. Kunststoff ausgast,
umfasst die folgenden Verfahrensschritte:
a) in wenigstens einem Autoklaven (2, 3) wird die unerwünschte Substanz zumindest teilweise, vorzugsweise zumindest überwiegend, aus dem Polymerwerkstoff und/oder Kunststoff des Prozessprodukts in der Gasphase oder durch Übergang in die Gasphase herausgelöst, ohne den Polymerwerkstoff und/oder Kunststoff zu zerstören oder zu zersetzen,
b) die herausgelöste unerwünschte Substanz in der Gasphase wird aus dem Autoklaven ausgeleitet.

## Beschreibung

Die Erfindung betrifft ein Verfahren und eine Vorrichtung zum Abführen wenigstens einer unerwünschten Substanz aus wenigstens einem Prozessprodukt.

Aus *EP 0 693 366 B1* ist ein Verfahren zum Herstellen von Verbundglasscheiben bekannt, bei dem zwei vorbeschichtete Glasscheiben über eine dazwischen angeordnete Kunststofffolie in einem Autoklaven unter Druck und einer erhöhten Temperatur miteinander verbunden werden. Dabei wird mit einem Druck zwischen 8 und 14 bar (800 bis 14.000 kPa) und einer Temperatur zwischen 100°C und 140°C gearbeitet. Bei dem Verbindungsprozess im Autoklaven wird die zunächst aus nachgiebigem Kunststoff bestehende Folie ausgehärtet und bildet dann eine starre feste Verbindung der beiden Glasscheiben. Gemäß *EP 0 693 366 B1* wird am Umfang des Verbunds aus Scheibe und Folie ein Umfangsband aufgebracht zum Abschluss und/oder Schutz der Kante der Verglasung.

In einem aus der Praxis bekannten Verfahren zum Herstellen von Verbund-Sicherheits-Glas-Scheiben werden die Verbundscheiben mit der dazwischen angeordneten Kunststofffolie auf einem Transportwagen stehend in den Autoklaven gefahren und danach wird im Autoklaven ein Druck von 13,5 bar erzeugt. Bei diesem Druck und einer Temperatur von ca. 150 °C erfolgt der Verbund. Anschließend wird bei Überdruck auf ca. 45°C abgekühlt. Jetzt setzt die kritische Entspannungsphase auf Umgebungsdruck ein, wobei bei dieser Entspannung Weichmacher aus der Folie ausdampft und die Folie fest wird. Als Kunststoff für Folie ist unter anderem ein PVB (Polyvinylbutyral) im Einsatz. Ein aus einer solchen Folie austretender Weichmacher ist Dihexyladipat. Die fertig hergestellten Verbundglaseinheiten werden aus dem Autoklaven herausgenommen und in ein Glaslager verbracht oder gleich transportiert. Beim Transport werden die Verbundgläser mit einem die Glasoberflächen und -kanten schützenden Transportpuder versehen.

Beim Aushärten der Kunststofffolie im Autoklaven werden bei diesen bekannten Verfahren zum Herstellen von Verbundglas die im Kunststoff enthaltenen Weichmacher verdampft, so dass die durch die Weichmacher bewirkte Plastizität oder Elastizität des Kunststoffes herabgesetzt wird und eine im Wesentlichen starre Polymerstruktur des Kunststoffes in der Folie entsteht.

Ein in der Praxis auftretendes Problem besteht nun darin, dass nach dem Prozess im Autoklaven immer noch Restmengen des Weichmachers in der Kunststofffolie der Verbundgläser enthalten sind. Infolgedessen kommt es zu Restausdampfung in den Glaslagern oder beim sofortigen Transport, insbesondere da die Scheiben auch noch eine Resttemperatur von 45°C beim Herausnehmen aus dem Autoklaven haben. Die während des Transportes der Verbundglasscheiben noch aus der Kunststofffolie ausdampfenden Restmengen des Weichmachers reagieren nun chemisch mit dem Transportpuder. Durch diese chemische Reaktion mit dem Weichmacher härtet das Transportpuder aus, wodurch vor allem bei längeren Transporten Kratz- und Schleifspuren und Schraffuren auf dem beschichteten bzw. veredelten Glas entstehen. Deshalb sind die Transportreichweiten für die derart hergestellten Verbundgläser derzeit beschränkt.

Ein weiteres Problem besteht darin, dass die Dämpfe des beim Prozess im Autoklaven aus der Kunststofffolie entwichenen Weichmachers einerseits den Autoklaven und dessen Innenbeschichtung kontaminieren und andererseits beim Öffnen des Autoklaven nach dem Prozess aus dem Autoklaven austreten, was für die Bedienpersonen eine gesundheitliche Belastung darstellt.

Aus *DE 33 12 538 A1* ist ein Verfahren zum Entfernen von Kondensationsprodukten von Bauteiloberflächen bekannt, insbesondere von Polymerschichten oder Polymerrückständen an Bauteilen der in der Kunststoffverarbeitungsindustrie zur Verarbeitung eingesetzten Geräte. Bei dem Verfahren gemäß *DE 33 12 538 A1* wird der mit den Kondensationsprodukt beschichtete Gegenstand in das Innere eines geschlossenen Gefäßes gebracht und die Luft aus dem Inneren des Gefäßes entfernt, indem man Dampf in das Gefäß hinein- und durch dieses hindurchströmen lässt. Der Druck in dem Gefäß bleibt dabei nahezu bei Atmosphärendruck. Nun wird mittels eines Überhitzers die Temperatur und damit der Dampfdruck in dem System erhöht, bis der Dampf vom gesättigten Zustand in einen überhitzten Zustand übergeführt ist. Dieser Übergang erfolgt wegen des im System eingestellten Atmosphärendrucks bei einer Temperatur von etwa 100°C, der Siedetemperatur des Wasser bei Atmosphärendruck. Der überhitzte Wasserdampf wird kontinuierlich weiter umgewälzt, bis seine Temperatur einen Wert in einem Bereich zwischen 170°C und 400°C erreicht. Dieser Temperaturbereich liegt oberhalb der Schmelztemperatur der typischen Kondensationspolymere bzw. Kondensationsprodukte. Innerhalb des angegebenen Temperaturbereichs findet eine hydrolytische Zersetzung des Polymers statt, die die Produkte depolymerisiert. Das von den Gegenstände abgetropfte oder hydrolytisch zersetzte und mit dem Wasserdampf mitgerissene Kondensationsprodukt wird mit diesem Verfahren ohne Schädigung der zu reinigenden Gegenstände entfernt. Der Druck im Inneren des Gefäßes wird gerade hoch genug gewählt, um zu verhindern, dass Luft aus der Umgebung in Kontakt mit den zu reinigenden Gegenständen gelangt, so dass ein gegenüber dem Atmosphärendruck geringfügig erhöhter Druck ausreicht.

Aus *DE 38 23 322 A1* ist ein Verfahren zum Reinigen und Entfetten von Behandlungsgut mit Lösungsmitteln bekannt, bei dem in einer abgeschlossenen Behandlungskammer Lösungsmittel auf das Behandlungsgut aufgebracht und das Behandlungsgut anschließend mit trockener erhitzter Luft getrocknet wird. Die mit dem Lösungsmittel und ggf. Verunreinigungen in Dampfform angereicherte Luft wird aus der Behandlungskammer in einem Kältemittelkühler unter Kondensieren des Lösungsmittels abgekühlt und nach dem Erhitzen wieder der Behandlungskammer in eine Kreislauf zugeführt, während das kondensierte Lösungsmittel für die nächste Behandlung rezirkuliert wird. Die lösungsmittelhaltige Luft aus der Behandlungskammer wird durch die den Kühler verlassende Reinluft in einem Wärmetauscher vorgekühlt und erst anschließend in den Kühler geleitet, während die solchermaßen vorgewärmte Reinluft anschließend erhitzt wird. Während in der Reinigungsphase bei der Zuführung des Lösungsmitteldampfes in die Behandlungskammer dort ein Überdruck entsteht, wird während der Trocknungsphase durch die Dampfkondensation im Kältemittelkühler ein Unterdruck erzeugt. Es muss deshalb die Behandlungskammer belüftet werden, was bisher durch zeitweiliges Öffnen einer Abluftleitung geschah. Dieses Belüften ist vor allem vor dem Öffnen der Behandlungskammer zum Austausch des Behandlungsgutes erforderlich. Dabei ließ sich nicht vermeiden, dass kurzfristig auch Lösungsmitteldampf austritt. Gemäß der *DE 38 23 322 A1* wird beim Einführen des Lösungsmitteldampfes in die Behandlungskammer die Luft aus der selben in einen abgeschlossenen volumenveränderlichen Raum verdrängt und während der Trocknungsphase der entstehende Unterdruck durch Rücksaugen aus diesem Verdrängungsraum kompensiert, wodurch eine Belüftung aus der Umgebung entfallen kann.

Die *DE 41 36 990 A1* offenbart ein Verfahren zur Entfettung und Reinigung von mit fett- und/oder ölhaltigen Stoffen behaftetem Gut, wobei das zu reinigende Gut unter Vakuumbedingungen in einer Prozesskammer derart erwärmt wird, dass die Fette und/oder Öle in Abhängigkeit ihres Aggregatzustandes vom Gut abgetrennt werden, insbesondere verdampft werden. Die abgetrennten Dämpfe der Fette und/oder Öle werden in einem Kondensator niedergeschlagen und als Kondensat gesammelt. Der Luftpartialdruck in der Prozesskammer beträgt höchstens 10 hPa. Alternativ wird ein Verfahren vorgeschlagen, bei dem das von den fett- und/oder ölhaltigen Stoffen zu reinigende Gut in eine Vakuumkammer eingebracht wird, in einem ersten Reinigungsschritt ein Lösungsmittel aufgebracht wird und das sich bildende Gemisch aus Lösungsmittel und abgelösten Fetten bzw. Ölen einem Verdampfer zugeführt wird, in einem zweiten Reinigungsschritt der sich am Verdampfer bildende Dampf dem Gut zugeleitet wird, an dessen Oberfläche der Dampf kondensiert und unter Kondensatbildung die Restverschmutzung beseitigt, in einem dritten Reinigungsschritt der Dampf einem Kondensator zugeführt wird, dessen gewonnenes Kondensat dem Reinigungsprozess als Lösungsmittel erneut zugeführt wird und in einem vierten Reinigungsschritt die Vakuumkammer derart weiter evakuiert wird, dass restliche Lösungsmitteldämpfe vollständig entfernt werden. Das Lösungsmittel kann insbesondere Petroleum oder Kerosin sein.

In *DE 42 31 306 A1* ist ein Verfahren zur Reinigung durch Polymere verschmutzten Maschinenteilen beschrieben, bei dem die durch Polymere verschmutzten Teile einer Erwärmung ausgesetzt werden im Inneren eines Autoklaven. In den Autoklav wird ein Dampfstrom eingeleitet, der sich mit den Reststoffen der Polymere vermischt, die von der thermischen Zersetzung dieser ursprünglich auf den zu behandelnden Teilen vorhandenen Polymere herrühren. Die aus dem Autoklav austretende Mischung aus überhitztem Dampf und thermisch zersetzten Reststoffen von Polymeren wird einer Behandlung zur Abscheidung der Schadstoffe unterworfen. Die Temperaturen im Autoklaven liegen zwischen 350°C und 400°C, die Temperatur des überhitzten Dampfes bei der Einleitung im Wesentlichen zwischen 400°C und 450°C. Nach der Einleitung des überhitzten Dampfes in den Autoklaven wird ein Luftstrom mit einer im Wesentlichen zwischen 400°C und 450°C liegendenden Temperatur eingeblasen, wobei die Temperatur im Innern des Autoklaven während der Einleitung des überhitzten Dampfstromes und/oder der überhitzten Luft im Wesentlichen 430°C beträgt. Der Überdruck über Atmosphärendruck im Innern des Autoklav beträgt während der Behandlung im Wesentlichen zwischen 0 bar und 1 bar.

Der Erfindung liegt nun die Aufgabe zugrunde, ein neues Verfahren zum Abführen wenigstens einer unerwünschten Substanz aus wenigstens einem Prozessprodukt anzugeben, mit dem insbesondere wenigstens ein Teil der vorgenannten Probleme beim Stand der Technik wenigstens teilweise vermieden oder zumindest gelindert werden.

Diese Aufgabe wird gemäß der Erfindung gelöst durch ein Verfahren mit den Merkmalen des Anspruchs 1, ein Verfahren mit den Merkmalen des Anspruchs 2 und eine Vorrichtung mit den Merkmalen des Anspruchs 20. Vorteilhafte Ausgestaltungen und Weiterbildungen des Verfahrens und der Vorrichtung ergeben sich aus den vom Anspruch 1 bzw. Anspruch 2 bzw. Anspruch 20 jeweils abhängigen Ansprüchen.

Das Verfahren gemäß Anspruch 1 ist zum Abführen (oder: Entfernen) wenigstens einer unerwünschten (oder: störenden, abzuführenden) Substanz aus wenigstens einem Prozessprodukt geeignet und bestimmt, wobei das wenigstens eine Prozessprodukt wenigstens teilweise aus wenigstens einem Polymerwerkstoff und/oder wenigstens einem Kunststoff besteht, der die wenigstens eine unerwünschte Substanz enthält, wobei die unerwünschte Substanz in einem vorgegebenen Druck- und Temperaturbereich aus dem Polymerwerkstoff bzw. Kunststoff ausgast, und umfasst die folgenden Verfahrensschritte:
a) in wenigstens einem Autoklaven wird die unerwünschte Substanz zumindest teilweise, vorzugsweise zumindest überwiegend, aus dem Polymerwerkstoff und/oder Kunststoff des Prozessprodukts in der Gasphase (oder: Dampfphase) oder durch Übergang in die Gasphase herausgelöst (oder: ausgegast, ausgedampft), ohne den Polymerwerkstoff und/oder Kunststoff zu zerstören oder zu zersetzen,
b) die herausgelöste unerwünschte Substanz wird, im Allgemeinen in der Gasphase, aus dem Autoklaven ausgeleitet (oder: abgeführt, abgesaugt, herausgefördert).

Das Verfahren gemäß Anspruch 2 ist zum Abführen wenigstens einer unerwünschten Substanz aus wenigstens einem Prozessprodukt geeignet und bestimmt, wobei das Prozessprodukt in wenigstens einem Primärprozess in wenigstens einem Autoklaven erzeugt, verarbeitet oder behandelt wurde oder wird, ferner wenigstens teilweise aus wenigstens einem Polymerwerkstoff und/oder wenigstens einem Kunststoff besteht und außerdem nach dem Primärprozess in dem wenigstens einen Polymerwerkstoff und/oder wenigstens einen Kunststoff wenigstens eine unerwünschte Substanz enthält, die in einem vorgegebenen Druck- und Temperaturbereich aus dem Polymerwerkstoff bzw. Kunststoff ausgast oder bei sofortiger Herausnahme der Prozessprodukte, wie beim Stand der Technik, ausgasen würde, und umfasst die folgenden Verfahrensschritten:
a) zumindest teilweises, vorzugsweise zumindest überwiegendes, Herauslösen der unerwünschten Substanz(en) aus dem Polymerwerkstoff und/oder Kunststoff in der Gasphase oder durch Übergang in die Gasphase in wenigstens einem Sekundärprozess innerhalb des wenigstens einen Autoklaven, ohne den Polymerwerkstoff und/oder Kunststoff zu zerstören oder zu zersetzen,
b2) Ausleiten der herausgelösten unerwünschten Substanz(en), im Allgemeinen in der Gasphase, aus dem Autoklaven.

Die Vorrichtung gemäß Anspruch 20 ist zum Abführen wenigstens einer unerwünschten Substanz aus wenigstens einem Prozessprodukt geeignet und bestimmt, welches Prozessprodukt wenigstens teilweise aus wenigstens einem Polymerwerkstoff und/oder wenigstens einem Kunststoff besteht, der die wenigstens eine unerwünschte Substanz enthält, wobei die unerwünschte Substanz in einem vorgegebenen Druck- und Temperaturbereich aus dem Polymerwerkstoff bzw. Kunststoff ausgast, und umfasst hierzu Mittel zum Durchführen wenigstens eines Sekundärprozesses in wenigstens einem Autoklaven zum zumindest teilweisen, vorzugsweise zumindest überwiegenden, Herauslösen der unerwünschten Substanz aus dem Polymerwerkstoff und/oder Kunststoff des Prozessprodukts in der Gasphase oder durch Übergang in die Gasphase, ohne den Polymerwerkstoff und/oder Kunststoff zu zerstören oder zu zersetzen, und zum Ausleiten der herausgelösten unerwünschten Substanz(en) in der Gasphase aus dem Autoklaven.

Unter Kunststoff wird in der vorliegenden Anmeldung ein technischer Werkstoff verstanden, der aus Makromolekülen besteht und vollsynthetisch durch Polymerisation, das heißt Verknüpfung von kleinen Molekülen oder Monomeren zu Makromolekülen oder Polymeren oder durch Abwandlung von makromolekularen Naturstoffen hergestellt wird, einschließlich aller daraus abgewandelten oder hergeleiteten Verbundkunststoffe, Compounds, Polymerlegierungen, Copolymere u. ä. Üblicherweise sind Kunststoffe auf Basis von Kohlenstoff aufgebaut, können aber auch auf Siliciumbasis beruhen. Unter einem Polymerwerkstoff wird in der vorliegenden Anmeldung ein aus Polymeren oder Makromolekülen zusammengesetzter oder aufgebauter Werkstoff verstanden, der neben den Kunststoffen oder synthetischen Polymerwerstoffen auch natürliche Polymerwerkstoffe umfasst, beispielsweise Polysaccharide, Proteine, Naturkautschuk oder Naturharze. Die unerwünschte Substanz im Sinne der vorliegenden Anmeldung ist jede Substanz, die nach dem Primärprozess noch in dem Polymerwerkstoff oder Kunststoff des Prozessproduktes enthalten ist und für die Struktur oder die Eigenschaften des Polymerwerkstoffes oder den Kunststoff nicht oder nicht mehr erforderlich ist. Unter Ausgasen der unerwünschten Substanz wird verstanden, dass die unerwünschte Substanz aus dem Gefüge oder Volumen des Polymerwerkstoffes oder Kunststoffes in der Gasphase oder Dampfphase austritt.

Der vorgegebene Druck- und Temperaturbereich umfasst oder entspricht im Allgemeinen Normalbedingungen, denen die Prozessprodukt nach der Entnahme aus dem Autoklaven ausgesetzt wird, beispielsweise beim anschließenden Lagern oder Transport oder Weiterverarbeiten des Prozessprodukts.

Unter einem Autoklav oder Autoklaven wird ein von einer druckdichten Wandung umschlossener Prozessraum oder Reaktor oder Prozesskammer oder Prozessbehälter verstanden, der über wenigstens eine Öffnung, die im Allgemeinen druckdicht verschließbar ist, zur Herausnahme von Prozessprodukten zugänglich ist.

Die Erfindung beruht auf der Überlegung, noch in dem Polymerwerkstoff oder Kunststoff des Prozessproduktes, insbesondere nach dem Primärprozess, enthaltene unerwünschte Substanz(en) unter definierten Bedingungen in einem Autoklaven gezielt auszudampfen oder auszugasen und dann aus dem Autoklaven kontrolliert abzuführen. Dadurch wird die Umgebung des Autoklaven beim Öffnen des Autoklaven und Herausnehmen des Prozessproduktes nicht mehr mit der unerwünschten Substanz kontaminiert und das Prozessprodukt ist von der unerwünschten Substanz zu einem Grad befreit, der durch die Bedingungen und die Zeitdauer des Reinigungs- oder Sekundärprozesses festgelegt werden kann. Insbesondere ist es möglich, die unterwünschte Substanz praktisch vollständig aus dem Polymerwerkstoff oder Kunststoff des Prozessproduktes zu entfernen, bevor das Prozessprodukt aus dem Autoklaven entnommen wird.

Vorteilhafte Weiterbildungen und Ausgestaltungen des Verfahrens und der Vorrichtung gemäß der Erfindung ergeben sich aus den von Anspruch 1 bzw. Anspruch 2 bzw. Anspruch 20 jeweils abhängigen Ansprüchen.

In einer besonders vorteilhaften Ausführungsform wird das Herauslösen der unerwünschten Substanz(en) durch Einstellen entsprechender Temperaturen und/oder Drücke in dem Autoklaven verwirklicht, wobei die Temperatur und/oder Druck in dem Autoklaven derart eingestellt werden bzw. wird, dass der Dampfpartialdruck oder die Dampfdruckkurve der unerwünschten Substanz(en) in dem Autoklaven erhöht oder deren Siedepunkt erniedrigt wird, so dass die Verdampfungsrate oder Ausgasungsrate der Substanz aus dem Polymerwerkstoff oder Kunststoff erhöht wird.

Vorzugsweise wird in dem Autoklaven dazu ein Unterdruck oder ein Vakuum gemäß einem vorgegebenen zeitlichen Druckverlauf erzeugt. Der Druckverlauf oder Druck wird dabei abhängig von der jeweiligen Dampfdruckkurve der betroffenen unerwünschten Substanz(en) eingestellt und/oder zeitweise in einem Bereich zwischen 1 mbar und 800 mbar, insbesondere in einem Bereich zwischen 80 mbar und 600 mbar bzw. im Bereich von Feinvakuum und Grobvakuum. Es hat sich als vorteilhaft herausgestellt, das Vakuum schrittweise oder in Stufen zu erhöhen bzw. den Druck entsprechend schrittweise zu erniedrigen. Dies erfolgt zumindest zeitweise in dem zeitlichen Druckverlauf, insbesondere zu Beginn. Zum Durchführen dieser Evakuierung oder Drucksenkung ist wenigstens eine an den Autoklaven angeschlossene oder anschließbare Gasfördereinrichtung, insbesondere eine Evakuierungseinrichtung, die insbesondere wenigstens eine Vakuumpumpe umfasst, vorgesehen.

In einer besonderen Ausführungsform ist die Gasfördereinrichtung oder Evakuierungseinrichtung an wenigstens zwei verschiedene Autoklaven angeschlossen oder anschließbar. Insbesondere kann für mehrere Autoklaven ein Netzwerk von Ventilen und wenigstens zwei Vakuumpumpen vorgesehen sein, die getrennt oder gemeinsam über Parallelschaltung an jeweils einen Autoklaven angeschlossen werden können. Die Evakuierungseinrichtung umfasst demnach wenigstens zwei Vakuumpumpen, wobei jeweils wenigstens eine Vakuumpumpe mit wenigstens einem der Autoklaven und jeweils wenigstens eine andere der Vakuumpumpen mit wenigstens einem anderen Autoklaven verbunden oder verbindbar und/oder beide Vakuumpumpen durch Parallelschaltung gemeinsam mit wenigstens einem Autoklaven verbunden oder verbindbar sind.

Die Steuerung der Verdampfungsrate oder des Dampfpartialdruckes der unerwünschten Substanz(en) in dem Autoklaven über die Einstellung des Druckes hat den Vorteil, dass die Temperatur im Autoklaven vergleichsweise niedrig gehalten werden kann und somit der Einfluss des Sekundärprozesses auf das aus dem Primärprozess entstandene Prozessprodukt vernächlässigbar ist bzw. das Prozessprodukt in seinen Eigenschaften unverändert bleibt. So kann insbesondere die Temperatur beim Sekundärprozess innerhalb des Auoklaven deutlich unterhalb der Erweichungstemperatur oder der Schmelztemperatur des Polymerwerkstoffes oder Kunststoffes gehalten werden und/oder bei oder unter der am Ende des Primärprozesses herrschenden Prozesstemperatur gehalten werden. Vorzugsweise liegt die Temperatur beim Sekundärprozess zumindest in der Größenordnung in einem Bereich, der dem Temperaturbereich am oder gegen Ende des Primärprozesses entspricht.

Es ist aber auch alternativ oder zusätzlich zur Druckeinstellung auch möglich, den Dampfpartialdruck oder die Dampfdruckkurve der unerwünschten Substanz(en) durch Steuerung oder Regelung der Temperatur im Autoklaven gemäß einem vorgegebenen zeitlichen Verlauf zu erhöhen, um das Herauslösen aus dem Polymerwerkstoff und/oder dem Kunststoff des Prozessproduktes zu unterstützen.

Sowohl bei der Einstellung des Druckes als auch der Temperatur beinhaltet ein zeitlicher Verlauf eine zunächst beliebige Abhängigkeit der jeweiligen Größe Druck oder Temperatur von der Zeit und insbesondere auch einen im Wesentlichen zumindest zeitweise konstanten, zeitunabhängigen Verlauf der Temperatur oder des Druckes.

Der Primärprozesses, während dessen das Prozessprodukt erzeugt, verarbeitet oder behandelt wird, findet vorzugsweise gemäß einem vorgegebenen zeitlicher Verlauf der Prozesstemperatur und/oder des Prozessdruckes im Autoklaven zumindest zeitweise unter Überdruck, insbesondere in einem Bereich zwischen 1,5 bar und 30 bar, und/oder erhöhter Prozesstemperatur, insbesondere in einem Bereich zwischen 60 °C und 180 °C, statt.

Zum Ausleiten der unerwünschten Substanz(en) aus dem Autoklaven ist in einer besonders vorteilhaften Ausführungsform wenigstens ein Spülschritt vorgesehen, bei dem
a) wenigstens ein Spülgas in den wenigstens einen Autoklaven eingeleitet wird und
b) die wenigstens eine unerwünschte Substanz zusammen mit dem Spülgas aus dem Autoklaven ausgeleitet wird.

Insbesondere wird dazu, beispielsweise durch Öffnen eines Ventils, das Spülgas in den unter Unterdruck stehenden Autoklaven eingelassen und gleichzeitig oder zeitlich versetzt wird die Gasfördereinrichtung betrieben, um das Spülgas mit der unerwünschten Substanz abzupumpen. So erreicht man entweder ein Auffüllen des Autoklaven mit Spülgas und anschließendes Abpumpen des Spülgases mit der unerwünschten Substanz oder einen praktisch kontinuierlichen Fluss oder Volumenstrom des Spülgases durch den Autoklaven. Dabei genügt es in einer vorteilhaften Ausführungsform, wenn die Gasatmosphäre im Autoklaven einmal ausgetauscht wird, dessen Innenvolumen also einmalig gespült wird. Der Volumenstrom des Spülgases ergibt sich dann als Quotient aus dem Volumen des Autoklaven und der zum einmaligen Evakuieren erforderlichen, von der Pump- oder Förderleistung abhängigen Förder- oder Evakuierungszeit.

Die Vorrichtung enthält im Allgemeinen wenigstens eine Kontrolleinrichtung zum Steuern und/oder Regeln des Sekundärprozesses im Autoklaven, wobei insbesondere die Evakuierungseinrichtung von der Kontrolleinrichtung angesteuert oder ansteuerbar ist und wobei vorzugsweise die Kontrolleinrichtung mit Mitteln zum Steuern und/oder Regeln wenigstens eines Primärprozesses zum Erzeugen, Verarbeiten oder Behandeln des Prozessproduktes in dem wenigstens einen Autoklaven in Signal- und/oder Datenaustausch steht oder bringbar ist.

Die unerwünschte(n) Substanzen in dem Kunststoff oder Polymerwerkstoff eines Prozessprodukt können Restbestände, Additive, Fremdeinlagerungen, Nebenprodukte oder Verunreinigungen sein, insbesondere Weichmacher, die die Erweichungstemperatur oder Sprödigkeit oder Härte des Kunststoffes herabsetzen, oder Lösungsmittel oder bei einem chemischen Prozess, beispielsweise einer Molekülverkettung oder -vernetzung, entstandene Reaktionsprodukte. Die Kunststoffe oder Polymerwerkstoffe sind vorzugsweise fest, können aber auch in pastösem oder flüssigem Zustand oder in Form seines Schaumes vorliegen. Ohne Beschränkung der Allgemeinheit sind hier zu nennen
a) Schmelzklebstoffe, insbesondere feste Klebstoffe, Klebefolien oder Klebeschichten, im Allgemeinen aus amorphen oder teilkristallinen Thermoplasten oder thermoplastischen Elastomeren oder Kondensationsharzen,
b) Lösungsmittelklebstoffe, d.h. in organischem Lösungsmittel gelöste Kunststoffe, die die Klebeverbindung nach Verdunsten oder Verdampfen des Lösungsmittels herstellen, insbesondere harte Kunststoffe, Kontaktklebstoffe und Reaktionsklebstoffe, z. B. Zweikomponentenkleber,
c) amorphe oder teilkristalline Thermoplaste, die normalerweise bei normaler Temperatur glasklar und meist spröde (amorphe TP) oder getrübt und meist zäh-hart (teilkristalline TP) sind und jeweils durch eingelagerte Weichmacher-Fremdmolekülen weichelastisch gemacht werden können, wobei durch Ausdampfen der Weichmacher der ausgehärtete oder starre Zustand sich (wieder) einstellt,
d) beispielsweise einer oder mehrere der folgenden Kunststoffe, die wenigstens teilweise auch den vorgenannten Gruppen zugeordnet werden können:
   Synthesekautschuke, PVB (Polyvinlybutyral), PA (Polyamid ), PVE (Polyvinylether), PIB (Polyisobuten), CR (Chlorbutadien-Elastomer), S/B/S (Styrol/Butadien/Styrol-Blockcopolymer ), ACM (Acrylester-Elastomer), TPU (thermoplastisches Polyurethan-Elastomer), PVAL (Polyvinylalkohol), S/EBM/S (Styrol/Ethylen/Buten/Styrol-TPE), E-thylen-Copolymer, E/VA (Ethylen/Vinylacetat-Elastomer), PE (Polyester), IIR (Isobuthylen/Isopren-Elastomer), EPDM (Ethylen-Propylen-Dien-Elastomer), PF (Phenol-Formaldehyd-Harze), UF (Harnstoff-Formaldehyd-Harze), MF (Melamin-Formaldehyd-Harze), Reaktionsharze, EP (Epoxidharze), PUR (vernetzte Polyurethane, Polycarbamate), PVC (Polyvinylchlorid), PMMA (Polymethylmethacrylat), PVAC (Polyvinylacetat)

Diese Kunststoffe oder Kunststoffprodukte können ihren Zustand durch Erstarren oder Aushärten bei Ausdampfen eines Weichmachers, Lösungsmittels oder Reaktionsprodukts verändern. Die Maßnahmen gemäß der Erfindung erlauben das vollständige Entfernen der noch in dem Kunststoff enthaltenen Reste des Weichmachers, Lösungsmittels oder Reaktionsprodukts, ohne den Kunststoff zu schädigen.

Der vorgegebene Druck- und Temperaturbereich umfasst im Allgemeinen normale Atmosphärenbedingungen in einem gemäßigten Klima und/oder wenigstens einen Druck von wenigstens annähernd Atmosphärendruck und wenigstens eine Temperatur zwischen - 15 °C und + 40 °C, insbesondere zwischen 0 °C bis 35 °C, vorzugsweise zwischen 5 °C und 25 °C.

Bevorzugte Anwendungen sind bei der Verbundglas- oder Isolierglasherstellung. Es sind aber eine Vielzahl anderer Anwendungen möglich in Herstellung, Weiterverarbeitung, Behandlung und Entsorgung von Kunststoffen und Polymerwerkstoffen.

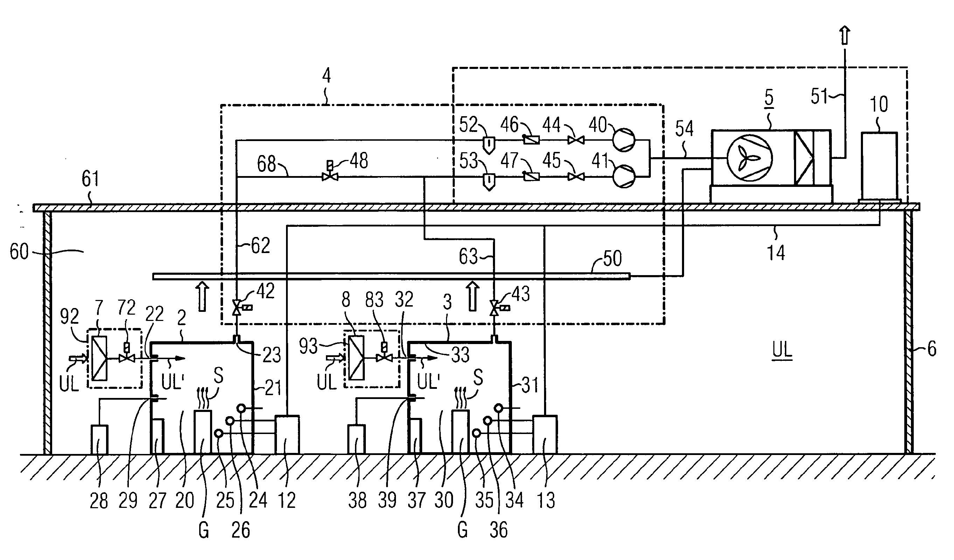

Die Erfindung wird im Folgenden anhand von Ausführungsbeispielen weiter erläutert. Dabei wird auf die einzige FIG der Zeichnung Bezug genommen.

Im Halleninnenraum 60 einer Halle 6 für industrielle Prozesse sind einer oder mehrere, im Beispiel der Figur zwei, Autoklaven 2 und 3 aufgestellt. Jeder der Autoklaven 2 und 3 umfasst einen von einer druckdichten und gasdichten Wandung 21 bzw. 31 umschlossenen Innenraum 20 bzw. 30, in den über eine - nicht dargestellte - Öffnung, die mittels einer Tür oder einem anderen Verschluss druckdicht verschließbar ist, Prozessgut oder Prozessprodukte G eingebracht werden können. Die Innenräume 20 und 30 der Autoklaven 2 und 3 bilden im Betrieb der Autoklaven 2 und 3 druckdicht verschlossene Prozessräume oder Prozesskammern, in denen Primärprozesse zum Erzeugen (Herstellen), Weiterverarbeiten oder Behandeln von Prozessprodukten 5 unter vorgegebenen Temperaturen und Drücken durchgeführt werden können. Zum Steuern oder Regeln der Primärprozesse in den Autoklaven 2 und 3 sind neben den Autoklaven 2 und 3 zugehörige Kontrolleinrichtungen 12 und 13 angeordnet, die üblicherweise als Schaltschränke mit programmierten standardisierten speicherprogrammierbarer Steuerungen (SPS) oder mit Hilfe von Computern (PCs) ausgeführt sind. Ferner sind zum Steuern und Regeln des Primärprozesses im Autoklaven 2 bzw. 3 jeweils Messeinrichtungen zum Messen von Prozessgrößen, im Beispiel der FIG ein Temperatursensor 25 bzw. 35 und ein Drucksensor 26 bzw. 36, sowie Stellglieder zum Steuern der Prozessgrößen, im Beispiel der FIG eine Heizeinrichtung 27 bzw. 37 und eine Gaszuführeinrichtung 28 bzw. 38 (z.B. eine Pumpeneinrichtung), die über einen Einlass 29 bzw. 39 Gas zur Veränderung, im Allgemeinen zur Erhöhung, des Druckes im Innenraum 20 bzw. 30 zuführt, vorgesehen.

Ferner ist in jedem Autoklaven 2 und 3 zusätzlich jeweils ein Drucksensor, insbesondere ein Differenzdrucksensor, 24 bzw. 34 vorgesehen, der einer Bedienperson meldet, ob die Druckdifferenz zwischen der Halle 6 und den Innenräumen 20 und 30 ausreichend klein ist, so dass die Autoklaventür nach Beendigung eines Prozesses geöffnet werden kann und die Prozessprodukte G aus den Autoklaven 2 und 3 entnommen werden können.

Um beim Öffnen eines der Autoklaven 2 oder 3 aus diesem austretende Gase oder Dämpfe gleich abführen zu können, ist oberhalb der Autoklaven 2 und 3 eine Abluftaufnahmeeinrichtung 50 angeordnet, die mit der Unterdruckseite oder Saugseite einer Abluftfördereinrichtung 5 verbunden ist. Die Abluftfördereinrichtung 5 enthält wenigstens einen Ventilator oder allgemein eine Strömungsmaschine zum Fördern von Gasen. Die Abluftfördereinrichtung 5 ist in der Regel einstufig mit einem eingeschalteten Zustand mit nur einer Förderleistung und einem ausgeschalteten Zustand ausgebildet, kann aber auch mehrstufig, d.h. mit mehreren einstellbaren Förderleistungen und/oder mit mehreren Ventilatoren in Parallelschaltung oder Reihenschaltung ausgebildet sein. Die Abluftfördereinrichtung 5 kann manuell oder auch automatisch gesteuert oder betrieben werden hinsichtlich des Ein- und Ausschaltens oder hinsichtlich ihrer Förderleistung, sofern diese einstellbar ist. Das Absaugen oder Abführen von Umgebungsluft UL aus dem Halleninnenraum 60 zumindest oberhalb der Autoklaven 2 und 3 ist durch Pfeile veranschaulicht.

Ferner ist, beispielsweise auf dem Hallendach 61 oder an einer beliebigen anderen Stelle, eine Steuer- und/oder Regeleinrichtung 10 angeordnet, die mit den Kontrolleinrichtung 12 und 13 des Autoklaven 2 bzw. 3 über eine Steuer- oder Datenleitung 14, insbesondere eine Datenbus, verbunden ist. Es können insbesondere vier oder acht Dateneingänge und -ausgänge vorgesehen sein pro Autoklaven bzw. Kontrolleinrichtung 12 bzw. 13.

Beide Autoklaven 2 und 3 weisen in ihren oberen Bereichen jeweils einen Einlass 22 bzw. 32 und einen Auslass 23 bzw. 33 zum Einleiten bzw. Ausleiten von Gasen oder Dämpfen zumindest in einem Sekundärprozess auf.

Der Einlass 22 bzw. 32 der Autoklaven 2 und 3 ist über ein Einlassventil 72 bzw. 83 jeweils mit einer Konditioniereinrichtung 7 bzw. 8 zum Konditionieren von durchtretender Umgebungsluft UL aus dem Halleninnenraum 60 verbunden. Die Konditioniereinrichtungen 7 und 8 umfassen insbesondere Luftfiltereinheiten, beispielsweise Grobfilter bis zur Klasse G4, Feinfilter ab Klasse F5 bis hin zu Schwebstofffiltern, können aber auch zusätzlich oder alternativ Luftwascheinrichtungen oder andere Reinigungskomponenten enthalten. Ferner können die Konditioniereinrichtungen 7 und 8 auch alternativ oder zusätzlich Lufttrocknungseinrichtungen zum Trocknen der Umgebungsluft UL enthalten, insbesondere auf dem Prinzip der Kältetrocknung basierende Systeme, bei denen die zu trocknende Luft an einer gekühlten Stelle eines Kältekreislaufes, insbesondere einem (Direkt-)Verdampfer oder Wärmetauscher, vorbeigeführt wird und die in der Umgebungsluft enthaltene Feuchtigkeit abgeschieden oder auskondensiert wird. Dieses Abkühlen und Kondensieren der Umgebungsluft kann insbesondere über einen Kompressionskältekreislauf oder -kältemaschine oder auch einen Absorptionskältekreislauf oder -kältemaschine erfolgen. Die Abkühlung erfolgt typischerweise auf Temperaturen von 3 °C bis 4 °C. Ferner sind im Allgemeinen Tröpfchenabscheider nachgeschaltet, um auskondensierte und suspendierte Flüssigkeitströpfchen aus der abgekühlten Umgebungsluft abzuscheiden, und, insbesondere unter Wärmerückgewinnung eine Rückaufheizung der Umgebungsluft vorgesehen. Solche Konditioniereinrichtungen sind an sich bekannt und bedürfen deshalb keiner näheren Erläuterung. Die relative Luftfeuchte der konditionierten Umgebungsluft UL' wird insbesondere in einem Bereich unter 60 %, vorzugsweise unter 30 %, beispielsweise bei 25 % oder darunter, gehalten. Die Konditioniereinrichtungen 7 und 8 bilden zusammen mit den zugehörigen Einlassventilen 72 bzw. 83 jeweils eine Spülgaszuführeinrichtung 92 bzw. 93.

Die Auslässe 23 und 33 der Autoklaven 2 bzw. 3 sind mit einem zugehörigen Auslassventil 42 bzw. 43 strömungstechnisch verbunden. Jedes der Auslassventile 42 und 43 ist über eine Leitung 62 bzw. 63 und über eine Serienschaltung aus einem Ölabscheider 52 bzw. 53, einer Rückschlagklappe 46 bzw. 47 und einem Sicherheitsventil 44 bzw. 45 mit der Saugseite oder Unterdruckseite einer zugehörigen Vakuumpumpe 40 bzw. 41 verbunden. Zwischen die beiden Leitungen 62 und 63 ist eine Verbindungsleitung 68 geschaltet, in der sich ein weiteres Ventil als Verbindungsventil 48 befindet. Die Ventile 42, 43, 44, 45 und 48 sind im Allgemeinen steuerbar und Sperrventile oder Absperrventile, die zwischen einem geöffneten und einem geschlossenen oder sperrenden Zustand hin und her schaltbar sind. Die Ventile 42, 43, 44, 45 und 48, die Vakuumpumpen 40 und 41, die Rückschlagklappen 46 und 47 und die entsprechenden Leitungen 62, 63 und 68 bilden eine an die Auslässe 23 und 33 angeschlossene Evakuierungseinrichtung 4 zum Evakuieren der Innenräume 20 und 30 der Autoklaven 2 und 3. Die Evakuierungseinrichtung 4 ist über eine Leitung 54, die die Druckseiten oder Förderseiten der Vakuumpumpen 40 und 41 zusammenschaltet, mit der Abluftfördereinrichtung 5 verbunden.

Die in der Evakuierungseinrichtung 4 weiter vorgesehenen Ölabscheider 52 und 53 dienen dabei zum Abscheiden von Ölnebeln oder Öl- oder Fettdämpfen aus der aus den Autoklaven 2 und 3 abgeführten Gasatmosphäre. Die von den Ölabscheidern 52 und 53 abgeschiedenen Ölnebel können insbesondere bei einem Primärprozess, bei dem Überdruck in den Autoklaven 2 bzw. 3 eingestellt wird durch das Öl der den Überdruck erzeugenden Pumpen der Gasfördereinrichtungen 28 und 38 verursacht werden. Die Ölabscheider 52 und 53 dienen neben der Vermeidung von Verpuffungen vor allem dazu, die Saugseiten der Vakuumpumpen 40 und 41 vor einer Verschmutzung mit Öl zu schützen. Dadurch können trockenlaufende Pumpen als Vakuumpumpen verwendet werden, beispielsweise Drehschiebervakuumpumpen.

Durch Öffnen des Verbindungsventils 48 können die beiden Vakuumpumpen 40 und 41 in einem Betriebsmodus parallel geschaltet werden, wodurch bei Öffnen nur eines Auslassventils 23 oder 33 eines der Autoklaven 2 oder 3 beide Vakuumpumpen 40 und 41 parallel Gas aus dem Autoklaveninnenraum 20 bzw. 30 absaugen und dadurch das Saugvolumen oder die Sauggeschwindigkeit im Wesentlichen verdoppelt werden kann. Bei geschlossenem Verbindungsventil 48 wird die Vakuumpumpe 40 ausschließlich zum Evakuieren des Innenraumes 20 des Autoklaven 2 und die Vakuumpumpe 41 ausschließlich zum Evakuieren des Innenraumes 30 des Autoklaven 3 verwendet.

Die Abluftfördereinrichtung 5 sowie die Vakuumpumpen 40 und 41 zusammen mit den Sicherheitsventilen 44 und 45, den Rückschlagklappen 46 und 47 und den Ölabscheidern 52 und 53 sind vorzugsweise, wie dargestellt, auf dem Hallendach 61 der Halle 6 angeordnet. Die entsprechenden Leitungen 62, 63 und 50 sind durch das Hallendach 61 durchgeführt. An der Druckseite der Abluftfördereinrichtung 5 ist eine Abluftleitung 51 angeschlossen, über die die aus dem Halleninnenraum 60 abgesaugte Umgebungsluft UL und das über die Evakuierungseinrichtung 4 aus einem oder beiden Autoklaven 2 und 3 abgesaugte und ggf. von Öl befreite Gas als Fortluft oder Abluft ins Freie geführt wird.

In jedem Autoklaven 2 und 3 sind unabhängig voneinander mittels der Evakuierungseinrichtung 4 und der zugehörigen Spülgaszuführeinrichtungen 92 und 93 Sekundärprozesse im Anschluss an einen Primärprozess und/oder vor einem Primärprozess durchführbar. Bei dem Sekundärprozess werden störenden oder unerwünschte Substanzen aus den Autoklaven 2 und 3 abgeführt. dazu wird wie folgt vorgegangen:

Zunächst wird nach dem Primärprozess der Innenraum 20 bzw. 30 des oder der Autoklaven 2 und 3 mit der Evakuierungseinrichtung 4 evakuiert, wobei ein Unterdruck erzeugt wird, der die noch in den Prozessprodukten G enthaltenen Substanzen schneller und in größeren Mengen verdampfen oder in die Gasphase überführen lässt oder, mit anderen Worten, den Dampfpartialdruck der Substanz(en) bei gleicher Temperatur deutlich erhöht. Vorzugsweise liegt die Temperatur im Autoklaven 2 oder 3 bei diesem Unterdruck oberhalb der Siedetemperatur der zu verdampfenden Substanzen. Dabei kann die Temperatur am Ende des Primärprozesses beibehalten werden. Der Unterdruck kann in mehreren Schritten erhöht werden, beispielsweise ein 50 prozentiges Vakuum, dann ein 6o prozentiges und dann ein 70 prozentiges oder sogar bis zu 90 prozentiges Vakuum eingestellt werden, entsprechend etwa 500 mbar, 400 mbar, 300 mbar bzw. 100 mbar Restdruck absolut. Der Unterdruck wird in Anpassung an die bei dem Prozessprodukt 5 zu verdampfende Substanz und abhängig von der Temperatur eingestellt und ist mit der beschriebenen Evakuierungseinrichtung 4 kontinuierlich einstellbar oder anpassbar. Dieser Unterdruck bzw. dieses Vakuum wird nun so lange aufrechterhalten, bis die Substanz weitgehend aus dem Prozessprodukt 5 ausgedampft ist.

Nun wird in einem anschließenden Spülschritt bei Druckausgleich oder Atmosphärendruck gereinigte Umgebungsluft UL' über die Spülgaszuführeinrichtungen 92 und 93 als Spülgas in den Autoklaven 2 bzw. 3 über den Einlass 22 bzw. 32 eingespült. Dazu wird bei dem Endunterdruck des Evakuierungsschritts einfach das entsprechende Einlassventil 72 bzw. 83 geöffnet und aufgrund des Unterdrucks im Autoklaven 2 bzw. 3 gegenüber dem Umgebungsdruck strömt die gereinigte Umgebungsluft UL' in den Autoklaven 2 bzw. 3 durch den Einlass 22 bzw. 32 ein.

Sofort oder nach einer bestimmten Verweilzeit wird mittels der Evakuierungseinrichtung 4 das Spülgas UL' zusammen mit den ausgedampften unerwünschten Substanzen aus den Autoklaven 2 oder 3 über den Auslass 23 bzw. 33 abgeführt und über die Abluftfördereinrichtung 5 über die Abluftleitung 51 ausgeblasen. Die Strömungsführung des Spülgases im Autoklaven 2 bzw. 3 wird dadurch unterstützt, dass der Einlass 22 und der Auslass an entgegengesetzten Seiten des Autoklaven 2 bzw. 3 angeordnet sind. In einer nicht dargestellten Ausführungsform sind Einlass 22 bzw. 32 und Auslass 23 bzw. 33 in gegenüberliegenden Bereichen diagonal zueinander angeordnet, so dass eine Diagonalspülung erfolgen kann.

Dabei wird Spülgas UL' nur solange zugeführt und wieder abgepumpt, bis das Volumen des Autoklaven 2 bzw. 3 einmal gespült worden ist, also praktisch ein Luftwechsel durchgeführt wurde. Bei einem Volumen des Autoklaven 2 bzw. 3 von beispielsweise 100 m³ und einer Förderleistung der Vakuumpumpen allein von 500 m³ pro h und in Parallelschaltung von 1000 m³ pro h wird das Volumen in bereits 6 12 min. bzw. 6 min. komplett ausgetauscht und dann der Sekundärprozess beendet.

Nun können, nach Druckausgleich auf Umgebungsdruck, die Prozessprodukte G aus dem Autoklaven 2 bzw. 3 entnommen werden. Ein späteres Ausgasen der Substanzen S aus dem Prozessprodukt G wird durch den Sekundärprozess verhindert, da das Ausgasen definiert und kontrolliert bereits bei der Fertigung in dem Sekundärprozess erfolgte und somit praktisch keine Substanz S mehr in den Prozessprodukten G vorhanden ist..

Ein Vorteil des Sekundärprozesses ist auch, dass im Autoklaven, beispielsweise dessen Innenwandisolierung anhaftende oder abgelagerte oder eingebundene Verschmutzungen ebenfalls ausgetragen werden können und damit eigene Reinigungsprozeduren entfallen können.

Dieses Verfahren ist bei einer Vielzahl von industriellen Prozessen anwendbar, bei denen aus Kunststoffen oder Polymerwerkstoffen Substanzen nach dem eigentlichen Fertigungs- oder Verarbeitungsprozess ausgasen und dadurch Probleme bereiten können. Ohne Beschränkung der Allgemeinheit seien hier genannt:
- Glasherstellung, insbesondere Herstellung von Spezialgläsern, Verbundglasscheiben und Isolierglaseinheiten, insbesondere für Fenster in Gebäuden oder Kraftfahrzeugen,
- Kunststoffherstellung, insbesondere Kunststofffolien, PVC-, Schaumund/oder Elastomer-Herstellung
- Kunststoffverpackungen, insbesondere für Lebensmittel
- Faserverbund-Polymerwerkstoffe
- chemische Industrie für chemische Reaktionen oder Analysen
- Reifenherstellung
- Flugzeugbau
- Automobilbau, insbesondere für Automobilsport

Bei der Herstellung von Verbundsicherheitsglasscheiben (VSG) werden, wie eingangs beschrieben, beim Primärprozess zwei bereits beschichtete Glasscheiben über eine Kunststofffolie, beispielsweise die Trisofil-Folie, unter Überdruck, typischerweise um die 13,5 bar, und einer erhöhten Temperatur von typischerweise 150 °C, verbunden, wobei die zunächst weiche Kunststofffolie unter Freigabe oder Ausdampfen von Weichmacher, beispielsweise Dihexyladipat, aushärtet und die Scheiben starr verbindet.

Beim Herstellen von Isolierglasfenstern werden zwei derartige Verbundglasscheiben in einem gemeinsamen Rahmen aus Aluminium oder Kunststoff eingesetzt über eine Abdichtmasse, beispielsweise eine unter dem Handelsnamen Thioplast bekannte Abdichtmasse. es hat sich herausgestellt, dass auch diese Abdichtmassen mit den restlichen Weichmachern der Verbundglasscheiben reagieren bzw. von diesen angegriffen werden und damit die Haltbarkeit der Isolierglaseinheiten herabsetzen. Auch dieses Problem wird ebenso wie das vorgenannte Problem bei der Verbundglasherstellung gemäß der Erfindung zumindest verringert werden und bei ausreichender Intensität und Dauer des Sekundärprozesses sogar beseitigt.

### Bezugszeichenliste

- 2: Autoklav
- 3: Autoklav
- 4: Evakuierungseinrichtung
- 5: Abluftfördereinrichtung
- 6: Halle
- 7, 8: Reinigungseinrichtung
- 10: Kontrolleinrichtung
- 12: Kontrolleinrichtung
- 13: Kontrolleinrichtung
- 14: Datenbus
- 20: Innenraum
- 21: Wandung
- 22: Einlass
- 23: Auslass
- 24: Drucksensor
- 25: Temperatursensor
- 30: Innenraum
- 31: Wandung
- 32: Einlass
- 33: Auslass
- 34: Drucksensor
- 35: Temperatursensor
- 40, 41: Vakuumpumpe
- 42, 43: Auslassventil
- 44, 45: Sicherheitsventil
- 46, 47: Rückschlagklappe
- 48: Verbindungsventil
- 50: Abluftaufnahmeeinrichtung
- 51: Abluftleitung
- 54: Leitung
- 60: Halleninnenraum
- 61: Hallendach
- 62, 63: Leitung
- 68: Leitung
- 72: Einlassventil
- 83: Einlassventil
- 92, 93: Spülgaszuführeinrichtung
- S: Substanz
- G: Prozessprodukt
- UL: Umgebungsluft
- UL': (gereinigte) Umgebungsluft

## Patentansprüche

1. Verfahren zum Abführen wenigstens einer unerwünschten Substanz aus wenigstens einem Prozessprodukt (G), das wenigstens teilweise aus wenigstens einem Polymerwerkstoff und/oder wenigstens einem Kunststoff besteht, der die wenigstens eine unerwünschte Substanz (S) enthält, wobei die unerwünschte Substanz in einem vorgegebenen Druckund Temperaturbereich aus dem Polymerwerkstoff bzw. Kunststoff ausgast,
mit den folgenden Verfahrensschritten:
a) in wenigstens einem Autoklaven (2, 3) wird die unerwünschte Substanz zumindest teilweise, vorzugsweise zumindest überwiegend, aus dem Polymerwerkstoff und/oder Kunststoff des Prozessprodukts in der Gasphase oder durch Übergang in die Gasphase herausgelöst, ohne den Polymerwerkstoff und/oder Kunststoff zu zerstören oder zu zersetzen,
b) die herausgelöste unerwünschte Substanz in der Gasphase wird aus dem Autoklaven ausgeleitet.

2. Verfahren zum Abführen wenigstens einer unerwünschten Substanz aus wenigstens einem Prozessprodukt,
a) wobei das Prozessprodukt
a1) in wenigstens einem Primärprozess in wenigstens einem Autoklaven erzeugt, verarbeitet oder behandelt wurde oder wird,
a2) wenigstens teilweise aus wenigstens einem Polymerwerkstoff und/oder wenigstens einem Kunststoff besteht und
a3) nach dem Primärprozess in dem wenigstens einen Polymerwerkstoff und/oder wenigstens einen Kunststoff wenigstens eine unerwünschte Substanz enthält, die in einem vorgegebenen Druck- und Temperaturbereich aus dem Polymerwerkstoff bzw. Kunststoff ausgast,
mit den folgenden Verfahrensschritten:
b) in wenigstens einem Sekundärprozess wird
b1) in dem wenigstens einen Autoklaven die unerwünschte Substanz zumindest teilweise, vorzugsweise zumindest überwiegend, aus dem Polymerwerkstoff und/oder Kunststoff in der Gasphase oder durch Übergang in die Gasphase herausgelöst, ohne den Polymerwerkstoff und/oder Kunststoff zu zerstören oder zu zersetzen,
b2) und die herausgelöste unerwünschte Substanz in der Gasphase wird aus dem Autoklaven ausgeleitet.

3. Verfahren nach einem oder mehreren der vorhergehenden Ansprüche, bei dem in wenigstens einem Spülschritt
a) wenigstens ein Spülgas in den wenigstens einen Autoklaven eingeleitet wird und
b) die wenigstens eine unerwünschte Substanz zusammen mit dem Spülgas aus dem Autoklaven ausgeleitet wird.

4. Verfahren nach Anspruch 3, bei dem das während eines Spülschritts eingeleitete und durchgeleitete Volumen des Spülgases wenigstens annähernd gleich dem Volumen des Autoklaven entspricht.

5. Verfahren nach Anspruch 3 oder Anspruch 4, bei dem als Spülgas Umgebungsluft aus einer Umgebung des Autoklaven, insbesondere aus einem Innenraum eines den Autoklaven umgebenden Gebäudes, insbesondere einer Halle, und/oder einer Außenumgebung außerhalb eines den Autoklaven umgebenden Gebäudes, insbesondere einer Halle, erzeugt und/oder verwendet wird,

6. Verfahren nach Anspruch 5, bei dem die Umgebungsluft vor dem Einleiten in den Autoklaven konditioniert wird, wobei insbesondere die Konditionierung der Umgebungsluft hinsichtlich Temperatur und/oder Feuchte und/oder Reinheit erfolgt, vorzugsweise die Umgebungsluft gefiltert und/oder getrocknet wird.

7. Verfahren nach einem oder mehreren der vorhergehenden Ansprüche, bei dem zum oder beim Herauslösen der unerwünschten Substanz(en) dem Polymerwerkstoff und/oder Kunststoff des Prozessprodukts die Temperatur und/oder der Druck in dem Autoklaven in einen solchen Bereich eingestellt wird, dass der Dampfpartialdruck oder die Dampfdruckkurve der unerwünschten Substanz(en) in dem Autoklaven erhöht wird oder deren Siedepunkt erniedrigt wird, insbesondere im Vergleich zu Bedingungen bei Raumtemperatur und Atmosphärendruck.

8. Verfahren nach einem oder mehreren der vorhergehenden Ansprüche, bei dem zum oder beim Herauslösen der unerwünschten Substanz(en) dem Polymerwerkstoff und/oder Kunststoff des Prozessprodukts in dem Autoklaven ein Unterdruck oder Vakuumdruck gemäß einem vorgegebenen zeitlichen Druckverlauf erzeugt wird, wobei der Druck insbesondere abhängig von der Dampfdruckkurve der unerwünschten Substanz(en) ist und/oder insbesondere zumindest zeitweise in einem Bereich zwischen 1 mbar und 800 mbar, vorzugsweise in einem Bereich zwischen 80 mbar und 600 mbar, eingestellt wird.

9. Verfahren nach einem oder mehreren der vorhergehenden Ansprüche, bei dem der Druck zumindest zeitweise in einzelnen aufeinanderfolgenden Schritten oder Stufen erniedrigt wird.

10. Verfahren nach einem oder mehreren der vorhergehenden Ansprüche, bei dem zum oder beim Herauslösen der unerwünschten Substanz(en) aus dem Polymerwerkstoff und/oder Kunststoff des Prozessprodukts in dem Autoklaven ein vorgegebener zeitlicher Verlauf der Temperatur eingestellt wird, wobei die Temperatur vorzugsweise in einem Bereich gehalten wird, der wenigstens annähernd im Temperaturbereich der Prozesstemperatur am oder gegen Ende des Primärprozesses, während dessen das Prozessprodukt erzeugt, verarbeitet oder behandelt wird, liegt oder gehalten wird.

11. Verfahren nach einem oder mehreren der vorhergehenden Ansprüche, bei dem während des Primärprozesses, während dem das Prozessprodukt erzeugt, verarbeitet oder behandelt wird, ein vorgegebener zeitlicher Verlauf der Prozesstemperatur und/oder des Prozessdruckes im Autoklaven eingestellt wird oder wurde, wobei vorzugsweise der Prozessdruck zumindest zeitweise über Atmosphärendruck, insbesondere in einem Bereich zwischen 1,5 bar und 30 bar, und/oder die Prozesstemperatur zumindest zeitweise über Raumtemperatur, insbesondere in einem Bereich zwischen 60 °C und 180 °C, liegen bzw. liegt.

12. Verfahren nach einem oder mehreren der vorhergehenden Ansprüche, bei dem wenigstens eine unerwünschte Substanz ein Weichmacher ist.

13. Verfahren nach einem oder mehreren der vorhergehenden Ansprüche, bei dem wenigstens eine unerwünschte Substanz ein Lösungsmittel ist.

14. Verfahren nach einem oder mehreren der vorhergehenden Ansprüche, bei dem das wenigstens eine Prozessprodukt wenigstens eine Folie oder Schicht, insbesondere eine Schaumschicht oder Kleberschicht, aus dem Kunststoff oder dem Polymerwerkstoff mit der wenigstens einen unerwünschten Substanz aufweist und/oder ein Verbundkörper mit wenigstens einer Folie oder Schicht, insbesondere eine Schaumschicht oder Kleberschicht, aus dem Kunststoff oder dem Polymerwerkstoff mit der wenigstens einen unerwünschten Substanz ist.

15. Verfahren nach Anspruch 14, bei dem im Primärprozess im Autoklaven wenigstens zwei Glasscheiben über eine Kunststofffolie oder Kunststoffschicht miteinander verbunden werden, wobei die Kunststofffolie zunächst durch in ihr enthaltene(n) Weichmacher plastisch oder elastisch verformbar ist und durch Einstellen der Temperatur) und/oder des Druckes im Autoklaven, insbesondere bei einer Temperatur zwischen 60 °C und 200 °C und einem Überdruck von 3 bar bis 20 bar, unter Ausdampfung von Weichmacher im Autoklaven ausgehärtet wird oder erstarrt und wobei die unerwünschte(n) Substanz(en) noch nicht aus der Kunststofffolie oder Kunststoffschicht ausgedampfte(r) Weichmacher ist bzw. sind.

16. Verfahren nach einem oder mehreren der vorhergehenden Ansprüche, bei dem aus dem Autoklaven auch Öl(e) und/oder Fett(e) ausgeleitet werden und vorzugsweise durch einen, vorzugsweise vor die Vakuumpumpe(n) geschalteten, Öl- oder Fettabscheider geführt werden bzw. von dem Spülgas getrennt bzw. wird bzw. werden, und/oder auch Verunreinigungen von der Innenwandung des Autoklaven oder von Gegenständen im Autoklaven abgelöst und aus dem Autoklaven ausgeleitet werden.

17. Verfahren nach einem oder mehreren der vorhergehenden Ansprüche, bei dem nach dem Sekundärprozess das oder die Prozessprodukt(e) aus dem Autoklaven entnommen wird bzw. werden und vorzugsweise anschließend ein erneuter Primärprozess mit neuen Prozessprodukt(en) im Autoklaven durchgeführt wird.

18. Verfahren zum Bereitstellen von Prozessprodukten, bei dem
a) in wenigstens einem Primärprozess wenigstens ein Prozessprodukt in wenigstens einem Autoklaven erzeugt, verarbeitet oder behandelt wird,
b) wobei das Prozessprodukt wenigstens teilweise aus wenigstens einem Polymerwerkstoff und/oder wenigstens einem Kunststoff besteht und
c) wobei in dem wenigstens einen Polymerwerkstoff und/oder wenigstens einen Kunststoff des Prozessprodukts nach dem Primärprozess wenigstens eine unerwünschte Substanz enthalten ist, die in einem vorgegebenen Druck- und Temperaturbereich aus dem Polymerwerkstoff bzw. Kunststoff ausgast,
d) nach dem Primärprozess ein Verfahren nach einem oder mehreren der Ansprüche 1 bis 17 zum Abführen der wenigstens einen der wenigstens einen unerwünschten Substanz durchgeführt wird, vorzugsweise in demselben Autoklaven.

19. Verfahren nach einem oder mehreren der vorhergehenden Ansprüche, bei dem der vorgegebene Druck- und Temperaturbereich wenigstens einen Druck von wenigstens annähernd Atmosphärendruck und wenigstens eine Temperatur zwischen - 15 °C und + 40 °C, insbesondere zwischen 0 °C bis 35 °C, vorzugsweise zwischen 5 °C und 25 °C umfasst.

20. Vorrichtung zum Abführen wenigstens einer unerwünschten Substanz aus wenigstens einem Prozessprodukt, das wenigstens teilweise aus wenigstens einem Polymerwerkstoff und/oder wenigstens einem Kunststoff besteht, der die wenigstens eine unerwünschte Substanz enthält, wobei die unerwünschte Substanz in einem vorgegebenen Druck- und Temperaturbereich, insbesondere bei einem Druck von wenigstens annähernd Atmosphärendruck und wenigstens einer Temperatur zwischen - 15 °C und + 40 °C, insbesondere zwischen 0 °C bis 35 °C, vorzugsweise zwischen 5 °C und 25 °C, aus dem Polymerwerkstoff bzw. Kunststoff ausgast, insbesondere zum Durchführen eines Verfahrens nach einem der Ansprüche 1 bis 19,
umfassend
Mittel zum Durchführen wenigstens eines Sekundärprozesses in wenigstens einem Autoklaven zum zumindest teilweisen, vorzugsweise zumindest überwiegenden, Herauslösen der unerwünschten Substanz aus dem Polymerwerkstoff und/oder Kunststoff des Prozessprodukts in der Gasphase oder durch Übergang in die Gasphase, ohne den Polymerwerkstoff und/oder Kunststoff zu zerstören oder zu zersetzen, und zum Ausleiten der herausgelösten unerwünschten Substanz(en) in der Gasphase aus dem Autoklaven.

21. Vorrichtung nach Anspruch 20, bei der die Mittel zum Durchführen wenigstens eines Sekundärprozesses wenigstens eine an den Autoklaven angeschlossene oder anschließbare Gasfördereinrichtung, insbesondere eine Evakuierungseinrichtung, die insbesondere wenigstens eine Vakuumpumpe umfasst, aufweisen.

22. Vorrichtung nach Anspruch 21, bei der die Gasfördereinrichtung oder Evakuierungseinrichtung an wenigstens zwei verschiedene Autoklaven angeschlossen oder anschließbar ist.

23. Vorrichtung nach Anspruch 22, bei der die Evakuierungseinrichtung wenigstens zwei Vakuumpumpen umfasst, wobei jeweils wenigstens eine Vakuumpumpe mit wenigstens einem der Autoklaven und jeweils wenigstens eine andere der Vakuumpumpen mit wenigstens einem anderen Autoklaven verbunden oder verbindbar und/oder beide Vakuumpumpen durch Parallelschaltung gemeinsam mit wenigstens einem Autoklaven verbunden oder verbindbar sind.

24. Vorrichtung nach einem oder mehreren der Ansprüche 20 bis 23, bei der wenigstens eine Abluftfördereinrichtung im Außenbereich des oder der Autoklaven angeordnet ist zum Abführen von aus dem oder den Autoklaven beim Öffnen austretender Abluft und/oder unerwünschter/n Substanz(en) in der Gasphase, wobei vorzugsweise die Vakuumpumpe(n) der Evakuierungseinrichtung mit ihren Förder- oder Überdruckseiten an die Abluftfördereinrichtung angeschlossen oder anschließbar sind zum Abführen der von der oder den Vakuumpumpen aus dem oder den Autoklaven abgesaugten Gasatmosphäre über die Abluftfördereinrichtung.

25. Vorrichtung nach einem der Ansprüche 20 bis 24 mit wenigstens einer Spülgaszuführeinrichtung (92 bzw. 93) zum Zuführen von Spülgas in den Autoklaven, die insbesondere Umgebungsluft als Spülgas zuführt und insbesondere eine Konditioniereinrichtung, insbesondere einen Filter und/oder eine Trocknungseinheit, zum Konditionieren der Umgebungsluft umfasst.
